(19) Europäisches Patentamt
European Patent Office
Office européen des brevets

(11) **EP 2 125 392 B1**

(12) **FASCICULE DE BREVET EUROPEEN**

(45) Date de publication et mention
de la délivrance du brevet:
**19.05.2010 Bulletin 2010/20**

(21) Numéro de dépôt: **07856876.3**

(22) Date de dépôt: **19.12.2007**

(51) Int Cl.:
***B60C 19/12*** *(2006.01)*

(86) Numéro de dépôt international:
**PCT/EP2007/011153**

(87) Numéro de publication internationale:
**WO 2008/080556 (10.07.2008 Gazette 2008/28)**

(54) **PNEUMATIQUE AVEC UNE COUCHE AUTO-OBTURANTE**

REIFEN MIT EINER SELBSTABDICHTENDEN LAGE

TYRE WITH A SELF-SEALING PLY

(84) Etats contractants désignés:
**AT BE BG CH CY CZ DE DK EE ES FI FR GB GR HU IE IS IT LI LT LU LV MC MT NL PL PT RO SE SI SK TR**

(30) Priorité: **22.12.2006 FR 0611306**

(43) Date de publication de la demande:
**02.12.2009 Bulletin 2009/49**

(73) Titulaires:
• **Société de Technologie MICHELIN
63000 Clermont-Ferrand (FR)**
• **MICHELIN Recherche et Technique S.A.
1763 Granges-Paccot (CH)**

(72) Inventeurs:
• **ALBERT, Loïc
F-63100 Clermont Ferrand (FR)**
• **MERINO LOPEZ, José
F-63200 Riom (FR)**
• **SILVAIN, Lucien
F-63100 Clermont-Ferrand (FR)**
• **AHOUANTO, Michel
F-63530 Enval (FR)**
• **LESAGE, Pierre
F-63000 Clermont-Ferrand (FR)**

(74) Mandataire: **Dequire, Philippe Jean-Marie Denis
M.F.P. Michelin,
SGD/LG/PI-F35-Ladoux
63040 Clermont-Ferrand Cedex 09 (FR)**

(56) Documents cités:
**EP-B1- 1 090 069     US-A- 4 113 799
US-A- 4 282 052     US-A- 4 359 078
US-A- 4 426 468     US-A- 4 913 209**

## Description

### Domaine de l'invention

La présente invention concerne un pneumatique comportant une couche auto-obturante (« *self-sealing* ») disposée sur sa paroi interne pour obturer d'éventuels trous dus à des perforations en service.

### Arrière-plan technologique

Pour pouvoir être utilisable, une couche auto-obturante doit satisfaire à de nombreuses conditions de nature physique et chimique. Elle doit notamment être efficace dans une très large gamme de températures d'utilisation et ce pendant toute la durée de vie des pneumatiques. Elle doit être capable d'obturer des trous lorsque l'objet perforant que nous appelons « clou » responsable reste en place. A l'expulsion du clou, la couche auto-obturante doit pouvoir combler le trou et rendre étanche le pneumatique, notamment dans des conditions hivernales.

De nombreuses solutions ont été imaginées mais n'ont pu se développer pour des pneumatiques de véhicule de tourisme notamment par manque de stabilité dans le temps ou d'efficacité dans des conditions extrêmes de température d'utilisation.

Pour contribuer à maintenir une bonne efficacité à haute température, le document US-A-4,113,799 propose une couche auto-obturante à base d'une combinaison de caoutchoucs butyls de haute et basse masses moléculaires réticulés partiellement, en présence éventuellement d'une faible part d'élastomère thermoplastique styrénique. Pour une bonne efficacité d'obturation, les couches auto-obturantes proposées dans ce document ont aussi un module élastique d'extension préférentiellement compris entre 0,035 et 0,063 MPa.

US-A-426,468 présente des couches auto-obturantes pour pneumatique à base de caoutchouc butyl de haute masse moléculaire, réticulé et dont la formulation est ajustée pour respecter des valeurs données pour les caractéristiques de contrainte rupture, allongement rupture et densité de réticulation.

Ces revêtements pénalisent les pneumatiques en termes de résistance au roulement. Ils peuvent aussi présenter une efficacité insuffisante notamment après l'expulsion d'un clou resté en place pendant une période notable dans la structure du pneumatique et/ou dans des conditions de température hivernales.

Le document EP-B-1 090 069 divulgue une composition auto-obturante avec 100 parties en masse d'un élastomère thermoplastique à base de styrène, 110 à 190 parties en masse d'un agent adhésif, 80 à 140 parties en masse d'un plastifiant liquide et 2 à 20 parties en masse d'un additif. Ce document ne donne aucun élément à propos des caractéristiques physiques des compositions. Celles-ci sont aussi susceptibles de pénaliser la résistance au roulement des pneumatiques qui les comprennent.

### Description de l'invention

L'invention a pour objet un pneumatique comportant au moins deux flancs, un sommet pourvu radialement extérieurement d'une bande de roulement, une structure de renfort de type carcasse, une armature de sommet, la surface interne des flancs et du sommet formant une paroi interne du pneumatique, au moins une portion de la paroi interne étant recouverte par une couche auto-obturante comportant un élastomère thermoplastique styrénique (dit « TPS ») et le pneumatique étant apte à avoir une pression de gonflage en service Pg donnée. Ce pneumatique est caractérisé en ce que, pour toute température dans une gamme de températures donnée comprise entre +30 et +100°C, la couche auto-obturante a un facteur de perte tg $\delta$ inférieur à 0,2 et un module dynamique G* inférieur à Pg ; tg $\delta$ et G* étant mesurés à une fréquence de 10 Hz.

La couche auto-obturante élastomère du pneumatique selon l'invention a l'avantage d'avoir dans une très large gamme de températures d'utilisation des pneumatiques un comportement mécanique pratiquement purement élastique. Ce comportement supprime pratiquement toute pénalisation en termes de résistance au roulement par rapport à un pneumatique ne comportant pas un tel revêtement et améliore substantiellement la vitesse d'obturation lors du retrait d'un clou resté en place dans la structure du pneumatique pendant un temps notable. Par temps notable, on entend de quelques heures à quelques jours.

On constate aussi que lorsque le module dynamique G* devient supérieur à la pression de gonflage Pg dans la gamme de température donnée, les propriétés d'obturation de la couche auto-obturante se dégradent. En effet, le moteur de plusieurs des mécanismes d'obturation étant les efforts de compression liés à la pression de gonflage du pneumatique, lorsque la module dynamique G* d'une couche auto-obturante est supérieur ou égal à la pression de gonflage Pg, on constate que la couche auto-obturante n'est plus assez déformable pour obturer efficacement les trous liés aux crevaisons notamment après expulsion de l'objet perforant. En revanche, certaines couches auto-obturantes trop rigides pour des pneumatiques de véhicules de tourisme dont la pression de service est entre 2 et 3 bar peuvent être utilisées avec succès pour des pneumatiques de véhicules poids lourd dont la pression de service est de l'ordre de 8 à 10 bar.

De préférence le facteur de perte tg $\delta$ est continûment inférieur à 0,15.

Cela permet d'assurer qu'il n'y a aucune pénalisation en résistance en roulement et une bonne efficacité d'obturation des crevaisons par le revêtement.

Le module dynamique G* est aussi préférentiellement supérieur à Pg/30. Cela, associé à la valeur très faible du facteur de perte permet une excellente stabilité de forme lors de roulage à haute vitesse et haute température.

Les Demanderesses ont aussi constaté qu'une plage préférentielle pour le module dynamique G* est :

$$0,01 < G* < 0,1 \text{ MPa}$$

une couche auto-obturante dont le module dynamique est compris dans cette plage peut être utilisée avec efficacité dans de nombreux types de pneumatique.

La gamme de température donnée peut s'étendre avantageusement à la plage [+10 ; +30]°C vers les basses températures pour prendre en compte les usages dans des conditions froides. La gamme de température donnée est alors de +10 à +100°C.

Avantageusement, cette gamme peut comprendre la plage [100 ; 130]°C vers les hautes températures pour assurer un bon comportement et notamment une bonne stabilité dimensionnelle aux hautes températures. La gamme de température donnée est alors de +10 à +130°C.

De préférence, le TPS est l'élastomère majoritaire de la couche auto-obturante.

L'élastomère thermoplastique styrénique est de préférence choisi dans le groupe constitué par les copolymères blocs styrène/butadiène/styrène (SBS), styrène/isoprène/styrène (SIS), styrène/ isoprène/ butadiène/ styrène (SIBS), styrène/éthylène/butylène/styrène (SEBS), styrène/éthylène/propylène/styrène (SEPS), styrène/éthylène/éthylène/propylène/styrène (SEEPS) et les mélanges de ces copolymères.

Le pneumatique selon l'invention comprend avantageusement une couche auto-obturante d'épaisseur minimale 0,3 mm et préférentiellement entre 0,5 et 10 mm. L'épaisseur de cette couche est notablement fonction du type de pneumatique concerné. Pour un véhicule de type poids lourd ou agricole, cette épaisseur peut être comprise entre 1 et 3 mm. Pour des pneumatique Génie Civil, l'épaisseur peut être comprise entre 2 et 10 mm. Enfin pour des véhicules de tourisme, cette épaisseur peut être comprise entre 0,4 et 2 mm.

L'allongement à la rupture $\varepsilon_R$ de la couche auto-obturante est de préférence supérieur à 500 % et même supérieur à 800 %. La contrainte à la rupture $\sigma_R$ est elle de préférence supérieure à 0,2 MPa.

L'invention a aussi pour objet un pneumatique comprenant une couche d'étanchéité constituée d'une composition de caoutchouc sensiblement étanche au gaz de gonflage couvrant substantiellement toute la paroi interne du pneumatique, dans lequel la couche auto-obturante recouvre, au moins en partie, la couche étanche du côté de la cavité interne du pneumatique.

Selon un autre mode de réalisation d'un pneumatique selon l'invention, la couche auto-obturante peut être disposée entre une couche d'étanchéité et le renfort de type carcasse.

Dans les pneumatiques selon l'invention la couche auto-obturante peut être disposée au niveau de leur sommet, cette couche peut se prolonger jusqu'aux équateurs, ou d'un flanc à l'autre au moins jusqu'à une position radiale correspondant sensiblement au rebord du crochet de jante lorsque le pneumatique est en position montée. L'étendue de la couche auto-obturante est fonction des risques de crevaison des pneumatiques concernés mais aussi du compromis entre ces risques et le poids de ces pneumatiques.

## Description brève des dessins

Tous les détails de réalisation sont donnés dans la description qui suit, complétée par les figures 1 à 5, dans lesquelles :

- la figure 1 présente de manière schématique une coupe radiale d'un pneumatique incorporant une couche auto-obturante conforme à l'invention ;
- la figure 2 illustre de manière schématique une coupe radiale d'un second mode de réalisation d'un pneumatique conforme à l'invention ;
- les figures 3 et 4 présentent de manière schématique les mécanismes d'obturation des couches auto-obturantes conforment à l'invention en présence d'un objet perforant et après son retrait ; et
- la figure 5 présente des résultats de caractérisation mécanique dynamiques de matériaux constituants de couches auto-obturantes conformes à l'invention.

## Description détaillée de l'invention

Les caractérisations dynamiques des matériaux élastomères sont réalisées sur le rhéomètre MCR 301 de la société Anton Paar. Les échantillons sont cylindriques avec une épaisseur de 2,5 mm et un diamètre de 4 mm. Les échantillons sont disposés dans une chambre thermique entre deux plateaux plans, l'un fixe et l'autre oscillant de façon sinusoïdale autour de son centre, on applique aussi une contrainte normale de 0,02 MPa pendant toute la durée des essais. On impose une déformation maximale de 1 % et on effectue un balayage en température de -100°C à 250°C avec une rampe de 5°/mn. Les résultats exploités sont le module de cisaillement dynamique G* et le facteur de perte tg δ dans la gamme de température donnée. On a :

$$G* = \sqrt{G'^2 + G''^2} \quad \text{et} \quad tg\delta = \frac{G''}{G'}$$

G* : module de cisaillement dynamique en MPa ;
G' : module réel de cisaillement en MPa ;
G" : module de perte en MPa ; et
δ : déphasage entre la déformation imposée et la contrainte mesurée.

On entend par module d'extension d'un matériau le module d'extension sécant apparent obtenu à une déformation d'extension uni axiale donnée ε, en première élongation (soit sans cycle d'accommodation), mesuré à 23°C ; la vitesse de traverse est de 500 mm.min$^{-1}$ (norme ASTM D412). On appelle ce module le module E.

$$E = \frac{\sigma}{\varepsilon} = \frac{F}{S_0 \varepsilon}$$ ; avec So section initiale de l'éprouvette, F force d'extension mesurée à la déformation considérée et σ = F/S$_0$ contrainte d'extension à la déformation considérée.

On entend par σ$_R$ et ε$_R$ les contraintes et allongements mesurés à la rupture des éprouvettes de matériaux (σ$_R$ est rapporté à la section initiale de l'éprouvette S$_0$).

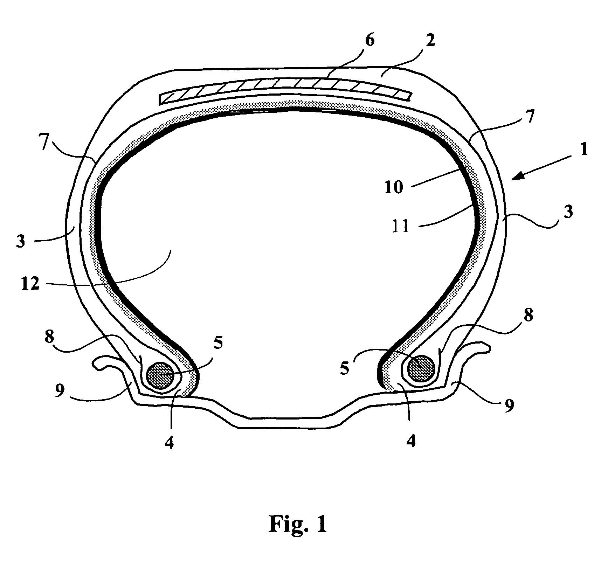

La figure 1 représente de manière schématique une coupe radiale d'un bandage pneumatique ou pneumatique incorporant une couche auto-obturante conforme à l'invention.

Ce pneumatique 1 comporte un sommet 2 renforcé par une armature de sommet ou ceinture 6, deux flancs 3 et deux bourrelets 4, chacun de ces bourrelets 4 étant renforcé avec une tringle 5. Le sommet 2 est surmonté d'une bande de roulement non représentée sur cette figure schématique. Une armature de carcasse 7 est enroulée autour des deux tringles 5 dans chaque bourrelet 4, le retournement 8 de cette armature 7 étant par exemple disposé vers l'extérieur du pneumatique 1 qui est ici représenté monté sur sa jante 9. L'armature de carcasse 7 est de manière connue en soi constituée d'au moins une nappe renforcée par des câbles dits "radiaux", par exemple textiles ou métalliques, c'est-à-dire que ces câbles sont disposés pratiquement parallèles les uns aux autres et s'étendent d'un bourrelet à l'autre de manière à former un angle compris entre 80° et 90° avec le plan circonférentiel médian (plan perpendiculaire à l'axe de rotation du pneumatique qui est situé à mi-distance des deux bourrelets 4 et passe par le milieu de l'armature de sommet 6). Une couche étanche 10 s'étend d'un bourrelet à l'autre radialement intérieurement relativement à l'armature de carcasse 7.

Le pneumatique 1 est caractérisé en ce que sa paroi interne comporte une couche auto-obturante 11. Conformément à un mode de réalisation préférentiel de l'invention, la couche auto-obturante 11 recouvre l'ensemble de la couche étanche 10 et constitue substantiellement toute la paroi interne du pneumatique. La couche auto-obturante peut aussi se prolonger d'un flanc à l'autre, au moins à partir d'une hauteur radiale correspondant aux rebords des crochets de jante lorsque le bandage pneumatique est en position montée. Selon d'autres modes de réalisation possibles, la couche auto-obturante 11 pourrait recouvrir uniquement une partie de la zone étanche à l'air (couche 10), par exemple seulement la zone sommet du pneumatique ou s'étendre au moins de la zone sommet jusqu'à mi-flancs (équateurs) du pneumatique.

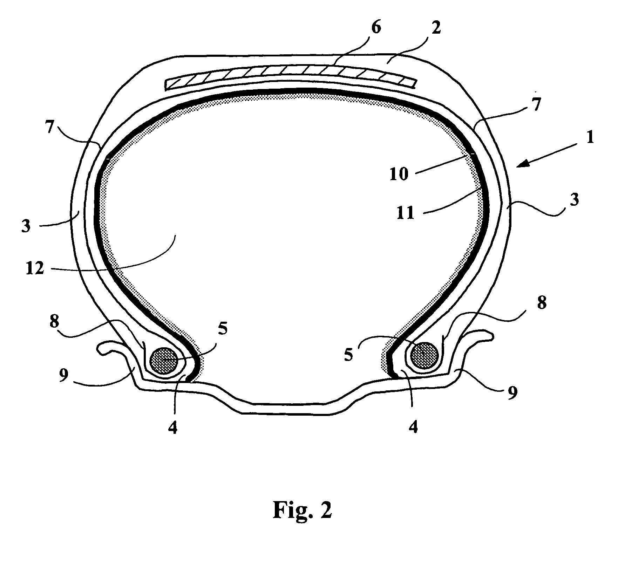

Selon un autre mode de réalisation préférentiel illustré à la figure 2, la couche auto-obturante 11 est disposée entre l'armature de carcasse 7 et la couche étanche 10. En d'autres termes, la couche étanche 10 recouvre la couche auto-obturante 11 du côté de la cavité interne du pneumatique 1.

La couche étanche (d'épaisseur 0,7 à 0,8 mm) est à base de caoutchouc butyl, présente une formulation conventionnelle pour une « gomme intérieure » (*"inner liner"*) qui définit usuellement, dans un pneumatique conventionnel, la face radialement interne dudit bandage destinée à protéger l'armature de carcasse de la diffusion d'air provenant de l'espace intérieur au pneumatique. Cette couche 10 étanche à l'air permet donc le gonflement et le maintien sous pression du pneumatique 1 ; ses propriétés d'étanchéité lui permettent de garantir un taux de perte de pression relativement faible, permettant de maintenir le bandage gonflé, en état de fonctionnement normal, pendant une durée suffisante, normalement de plusieurs semaines ou plusieurs mois.

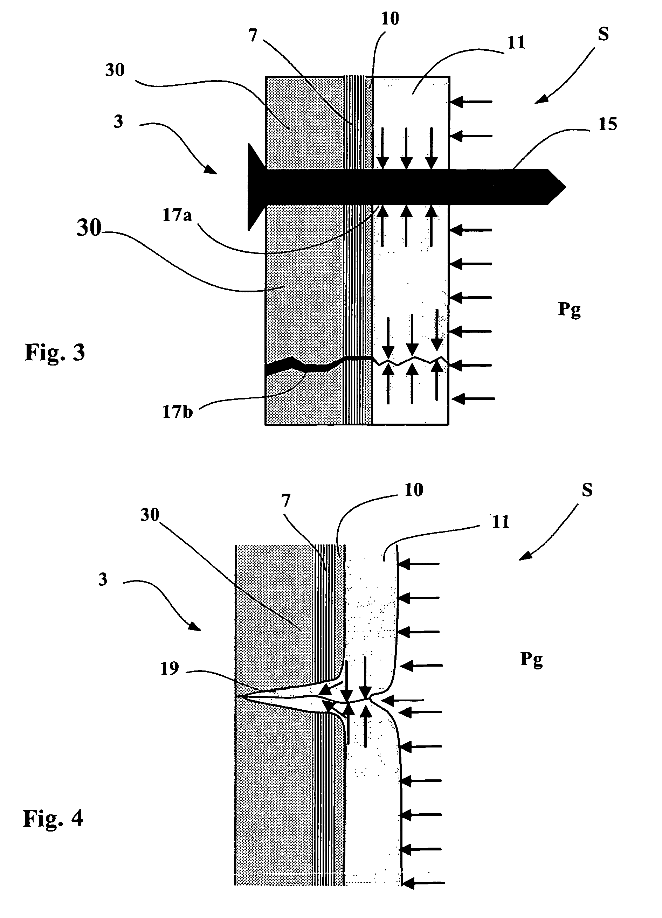

Les figures 3 et 4 illustrent de manière très schématique les mécanismes d'obturation des couches auto-obturantes conformément à l'invention en présence d'un objet perforant et après son retrait. Ces deux figures présentent une portion agrandie d'une portion S d'un flanc 3 du pneumatique 1.

A la figure 3, un objet perforant 15 a traversé complètement le flanc 3 du pneumatique en créant la fissure 17a. L'objet perforant ou clou est resté en place et les flèches indiquent le sens des contraintes créées par la pression de gonflage Pg qui règne à l'intérieur de la cavité interne 12 du pneumatique 1. Cette pression de gonflage Pg met la couche auto obturante dans un état de compression hydrostatique d'autant plus parfaite que son module d'élasticité d'extension ou son module dynamique de cisaillement sont faibles. Ces efforts appliquent le matériau de la couche auto-obturante contre l'objet perforant 15 et assurent l'étanchéité de la fissure 17a.

A la même figure 3, on voit la fissure 17b après retrait du clou 15 lorsque les deux lèvres de la fissure dans le matériau 30 du flanc 3 et les autres couches de matériaux sont très proches. En pareil cas, les mêmes efforts de compression hydrostatique assurent la fermeture des lèvres de la fissure 17b dans la couche auto-obturante et ainsi l'étanchéité de cette fissure 17b.

Il est à noter que lorsque le clou reste en place, la couche étanche 11 permet de limiter très fortement le débit de fuite à travers la fissure 17a. En revanche, lors du retrait du clou, cette couche étanche est absolument incapable d'obturer la fissure 17b et la mise à plat est souvent pratiquement instantanée.

La figure 4 présente le cas où, après le retrait de l'objet perforant, les lèvres de la fissure créée dans la structure du flanc 3 du pneumatique sont écartées notablement et laissent un véritable trou de dimension finie. Un tel trou peut couramment atteindre plusieurs mm de diamètre. Dans ce cas, le moteur de l'obturation d'une telle fissure 17b est toujours la pression hydrostatique engendrée dans la couche auto-obturante par la pression de gonflage Pg. Ces efforts entraînent un déplacement dans la fissure pour la combler du matériau de la couche auto-obturante proche de la fissure. Il en résulte une excellente obturation de la fissure.

Ce déplacement est d'autant plus aisé que le module dynamique du matériau de la couche auto-obturante est plus faible. En tout état de cause, ce module doit être inférieur à la valeur de la pression de gonflage pour que des fissures de diamètre notable puissent être obturées. Ce module dynamique ne doit pas non plus être trop bas pour éviter que le matériau de la couche auto-obturante ne passe au travers de la fissure. Ces déplacements demandent aussi aux matériaux de la couche auto-obturante un allongement rupture élevé associé à une contrainte rupture élevée pour pouvoir combler les fissures sans se rompre. Un allongement rupture supérieur à 500 % et préférentiellement supérieur à 800 % associé à une contrainte rupture supérieure à 0,2 MPa pour les matériaux conformes à l'invention sont satisfaisants.

Les couches auto-obturantes conforme à l'invention ont un comportement mécanique très proche d'un matériau élastique. Ce comportement leur donne un avantage substantiel vis-à-vis des couches auto-obturantes usuelles dont le comportement mécanique est beaucoup plus visqueux. Cet avantage est mis en évidence lors du retrait des objets perforants, notamment lorsque cet objet perforant est resté en place quelques heures voire quelques jours et plus. Dans un tel cas, le matériau de la couche auto-obturante usuelle a eu largement le temps de se relaxer complètement tout autour de l'objet perforant et sa viscosité s'oppose aux efforts de compression hydrostatique qui tendent à faire fluer le matériau dans la fissure créée par le retrait. Il peut en résulter, notamment si son collant à l'objet perforant a diminué, un défaut d'étanchéité pendant un temps plus ou moins long. Ce défaut d'étanchéité est très facilement audible lors du retrait de l'objet perforant.

En revanche les couches auto-obturantes conforme à l'invention ont un comportement pratiquement purement élastique et lors du retrait, sous l'action des efforts de compression hydrostatique, leur réponse est quasiment instantanée. On n'observe plus ce défaut d'étanchéité.

Les élastomères thermoplastiques styréniques (en abrégé "TPS") sont des élastomères thermoplastiques se présentant sous la forme de copolymères blocs à base de styrène.

De structure intermédiaire entre polymères thermoplastiques et élastomères, ils sont constitués de manière connue de séquences rigides polystyrène reliées par des séquences souples élastomère, par exemple polybutadiène, polyisoprène ou poly(éthylène/butylène). Ce sont souvent des élastomères triblocs avec deux segments rigides reliés par un segment souple. Les segments rigides et souples peuvent être disposés linéairement, en étoile ou branchés.

De préférence, la couche auto-obturante selon l'invention comprend un l'élastomère TPS choisi dans le groupe constitué par les copolymères blocs styrène/ butadiène/ styrène (SBS), styrène/ isoprène/ styrène (SIS), styrène/ isoprène/ butadiène/ styrène (SIBS), styrène/ éthylène/ butylène/ styrène (SEBS), styrène/ éthylène/ propylène/ styrène (SEPS), styrène/ éthylène/ éthylène/ propylène/ styrène (SEEPS) et les mélanges de ces copolymères.

Plus préférentiellement, ledit élastomère est choisi dans le groupe constitué par les copolymères SEBS, les copolymères SEPS et les mélanges de ces copolymères.

Selon un autre mode de réalisation préférentiel de l'invention, le taux de styrène, dans l'élastomère TPS, est compris entre 5 et 50 %.

En dessous du minimum indiqué, le caractère thermoplastique de l'élastomère risque de diminuer de manière sensible tandis qu'au-dessus du maximum préconisé, l'élasticité de la composition peut être affectée. Pour ces raisons, le taux de styrène est plus préférentiellement compris entre 10 et 40%, en particulier entre 15 et 35%.

On préfère que la température de transition vitreuse (Tg, mesurée selon ASTM D3418) de l'élastomère TPS soit inférieure à -20°C, plus préférentiellement inférieure à -40°C.

Une valeur de Tg supérieure à ces minima, impliquant une Tg plus élevée de la composition auto-obturante elle-même, peut diminuer les performances de la composition auto-obturante lors d'une utilisation à très basse température ; pour une telle utilisation, la Tg de l'élastomère TPS est plus préférentiellement encore inférieure à -50°C.

La masse moléculaire moyenne en nombre (notée Mn) de l'élastomère TPS est préférentiellement comprise entre 50 000 et 500 000 g/mol, plus préférentiellement comprise entre 75 000 et 450 000. En dessous des minima indiqués, la cohésion entre les chaînes d'élastomère TPS, en raison de sa dilution (quantité d'agent d'extension), risque d'être affectée ; d'autre part, une augmentation de la température d'usage risque d'affecter les propriétés mécaniques, notamment les propriétés à la rupture, avec pour conséquence une performance diminuée "à chaud". Par ailleurs, une masse Mn trop élevée peut être pénalisante pour la souplesse de la composition, aux taux d'huile d'extension préconisés. Ainsi, on a constaté qu'une valeur comprise dans un domaine de 250 000 à 400 000 était particulièrement bien adaptée, notamment à une utilisation de la composition auto-obturante dans un bandage pneumatique.

La masse moléculaire moyenne en nombre (Mn) de l'élastomère TPS est déterminée de manière connue, par chromatographie d'exclusion stérique (SEC). L'échantillon est préalablement solubilisé dans du tétrahydrofuranne à une concentration d'environ 1 g/l ; puis la solution est filtrée sur filtre de porosité 0,45 μm avant injection. L'appareillage utilisé est une chaîne chromatographique "WATERS alliance". Le solvant d'élution est le tétrahydrofuranne, le débit de 0,7 ml/min, la température du système de 35°C et la durée d'analyse de 90 min. On utilise un jeu de quatre colonnes WATERS en série, de dénominations commerciales "STYRAGEL" ("HMW7", "HMW6E" et deux "HT6E"). Le volume injecté de la solution de l'échantillon de polymère est de 100 μl. Le détecteur est un réfractomètre différentiel "WATERS 2410" et son logiciel associé d'exploitation des données chromatographiques est le système "WATERS MILLENIUM". Les masses molaires moyennes calculées sont relatives à une courbe d'étalonnage réalisée avec des étalons de polystyrène.

L'élastomère TPS peut constituer la totalité de la matrice élastomère ou la majorité pondérale (de préférence pour plus de 50 %, plus préférentiellement pour plus de 70%) de cette dernière lorsqu'elle comporte un ou plusieurs autre(s) élastomère(s), thermoplastiques ou non, par exemple du type diéniques.

Selon un mode de réalisation préférentiel, l'élastomère TPS est le seul élastomère, et le seul élastomère thermoplastique présent dans la composition auto-obturante.

Pour obtenir des modules dynamiques conformes à l'invention, les couches auto-obturantes comportent préférentiellement des huiles d'extension (ou huiles plastifiantes), utilisées à un taux très élevé, compris entre 200 et 700 pce (soit entre 200 et 700 parties en poids pour cent parties d'élastomère).

On peut utiliser toute huile d'extension, de préférence à caractère faiblement polaire, apte à étendre, plastifier des élastomères, notamment thermoplastiques.

A température ambiante (23°C), ces huiles, plus ou moins visqueuses, sont des liquides (c'est-à-dire, pour rappel, des substances ayant la capacité de prendre à terme la forme de leur contenant), par opposition notamment à des résines, en particulier tackifiantes, qui sont par nature solides.

De préférence, l'huile d'extension choisie dans le groupe constitué par les huiles polyoléfiniques (c'est-à-dire issues de la polymérisation d'oléfines, monooléfines ou dioléfines), les huiles paraffiniques, les huiles naphténiques (à basse ou haute viscosité), les huiles aromatiques, les huiles minérales, et les mélanges de ces huiles.

Plus préférentiellement, on utilise une huile polyisobutène, notamment polyisobutylène (PIB), une huile paraffinique ou un mélange de ces huiles.

A titre d'exemples, des huiles polyisobutylène sont commercialisées notamment par la société Univar sous la dénomination "Dynapak Poly" (e.g. "Dynapak Poly 190"), par BASF sous les dénominations "Glissopal" (e.g. "Glissopal 1000") ou "Oppanol" (e.g. "Oppanol B12") ; des huiles paraffiniques sont commercialisées par exemple par Exxon sous la dénomination "Telura 618" ou par Repsol sous la dénomination "Extensol 51".

La masse moléculaire moyenne en nombre (Mn) de l'huile d'extension est préférentiellement comprise entre 200 et 30 000 g/mol, plus préférentiellement encore comprise entre 300 et 10 000 g/mol.

Pour des masses Mn trop basses, il existe un risque de migration de l'huile à l'extérieur de la composition auto-obturante, tandis que des masses trop élevées peuvent entraîner une rigidification excessive de cette composition. Une masse Mn comprise entre 400 et 3000 g/mol s'est avérée constituer un excellent compromis pour les applications visées, en particulier pour une utilisation dans un bandage pneumatique.

La masse moléculaire moyenne en nombre (Mn) de l'huile d'extension est déterminée par SEC, l'échantillon étant préalablement solubilisé dans du tétrahydrofuranne à une concentration d'environ 1 g/l ; puis la solution est filtrée sur filtre de porosité 0,45μm avant injection. L'appareillage est la chaîne chromatographique "WATERS alliance". Le solvant d'élution est le tétrahydrofuranne, le débit de 1 ml/min, la température du système de 35°C et la durée d'analyse de 30 min. On utilise un jeu de deux colonnes "WATERS" de dénomination "STYRAGEL HT6E". Le volume injecté de la solution de l'échantillon de polymère est de 100 μl. Le détecteur est un réfractomètre différentiel "WATERS 2410" et son logiciel associé d'exploitation des données chromatographiques est le système "WATERS MILLENIUM". Les masses molaires moyennes calculées sont relatives à une courbe d'étalonnage réalisée avec des étalons de polystyrène.

L'homme du métier saura, à la lumière de la description et des exemples de réalisation qui suivent, ajuster la quantité d'huile d'extension en fonction des conditions particulières d'usage de la couche auto-obturante, notamment du type de pneumatique dans lequel elle est destinée à être utilisée.

On préfère que le taux d'huile d'extension soit compris entre 250 et 600 pce. En dessous du minimum indiqué, la composition auto-obturante risque de présenter une rigidité trop forte pour certaines applications tandis qu'au-delà du maximum préconisé, on s'expose à un risque de cohésion insuffisante de la composition. Pour cette raison, le taux d'huile d'extension est plus préférentiellement compris entre 300 et 500 pce, notamment pour une utilisation de la composition auto-obturante dans un bandage pneumatique.

Des élastomères TPS tels que SEPS ou SEBS étendus avec de forts taux d'huiles sont bien connus et sont disponibles commercialement. A titre d'exemples, on peut citer les produits commercialisés par la société Vita Thermoplastic Elastomers ou VTC (« VTC TPE group »), sous la dénomination « Dryflex » (e.g. « Dryflex 967100 ») ou « Mediprene » (e.g. « Mediprene 500 000M ») et ceux vendus par Multibase sous dénomination « Multiflex » (e.g. « Multiflex G00 »).

Ces produits, développés notamment pour des applications médicales, pharmaceutiques ou cosmétiques, peuvent être mis en oeuvre de façon classique pour des TPE, par extrusion ou moulage, par exemple à partir d'une matière première disponible sous la forme de billes ou de granulés.

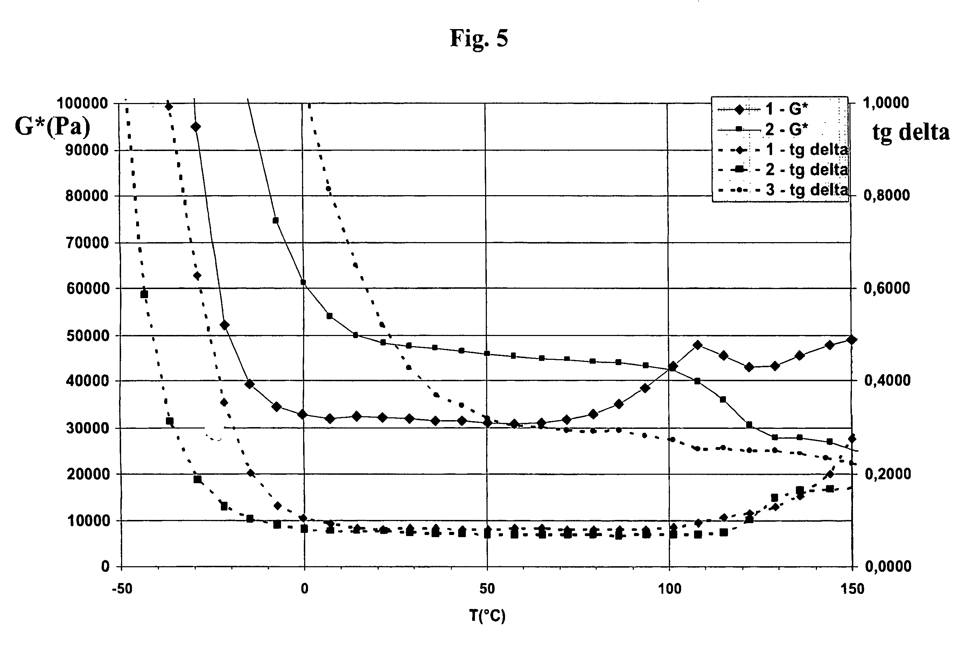

La figure 5 présente les propriétés dynamiques de trois matériaux dont deux conformes à l'invention. Le matériau 1 est le produit commercial « Mediprene 500 000 M » et le matériau 2 le produit commercial « Multiflex G00 ». Ces deux matériaux comportent des taux d'huile d'extension paraffiniques de l'ordre de 400 pce en masse. Le matériau 3 est un mélange usuellement utilisé comme couche étanche. Il est à base d'un élastomère butyl.

A la figure 5 sont représentés en abscisse la température de mesure entre -50°C et +150°C et en ordonnée le module dynamique de cisaillement G* exprimé avec une échelle linéaire en Pa (axe de gauche) et le facteur de perte tg delta (axe de droite). Les courbes représentant G* en fonction de la température sont en traits pleins et celles tg delta en traits pointillés. Pour faciliter l'observation, l'échelle de G* se limite à la valeur maximale préférentielle G*= 100 000 Pa (ou 1 bar) et l'échelle de tg delta se limite à 1.

Les matériaux 1 et 2 ont leur valeurs de tg delta inférieure à 0,15 dans toute la plage de températures [0 ; 130°C]. Leur comportement est ainsi pratiquement purement élastique dans toute cette plage de températures et la résistance au roulement de pneumatiques comportant cette couche auto-obturante a été mesurée et a confirmé l'absence de toute pénalisation liée la présence de cette couche auto-obturante. A titre de rappel, la pénalisation en résistance au roulement d'un pneumatique comportant un revêtement usuel anti-obturant peut atteindre 5 %.

Le module dynamique de cisaillement de ces deux matériaux est compris entre 30 000 et 60 000 Pa dans la même gamme de température. Ces valeurs de module dynamique de cisaillement leur donnent une très grande souplesse très favorable pour les mécanismes d'obturation des fissures et trous pour des véhicules de tourisme dont la pression de gonflage est de l'ordre de 1 à 3 bar.

A titre de comparaison le matériau 3 a une valeur de tg delta continûment supérieure à 0,2 dans toute la gamme de températures considérée. Une couche d'un tel matériau entraîne une pénalisation notable en résistance au roulement, d'autant plus nette que le module dynamique de cisaillement est lui aussi très élevé, de l'ordre de 1 MPa dans la gamme de températures considérée.

Il est à noter que la courbe de tg delta de ce troisième matériau augmente très sensiblement dès que la température descend en dessous de 50°C, cela veut dire que la pénalisation en résistance au roulement sera plus sensible dans des conditions hivernales, mais aussi que l'augmentation du module dynamique de cisaillement associée va entraîner une dégradation du comportement en obturation de fissures à basse température.

C'est un avantage notable des matériaux conformes à l'invention d'avoir un comportement stable en obturation des fissures dans une très large gamme de températures, notamment aux températures froides.

A haute température, le fait que les augmentations observées des valeurs de tg delta ne soient sensible qu'au-delà de 100°C est très positif pour garantir une bonne stabilité dimensionnelle des couches auto-obturantes dans le pneumatique, notamment lors de roulage à grande vitesse.

Les deux matériaux 1 et 2 ont un allongement rupture supérieur à 1 000 % et une contrainte rupture supérieure à 0,2 MPa.

Les pneumatiques 1 des figures 1 et 2 pourvus de leurs couches auto-obturantes 11 tel que décrites ci-dessus peuvent être réalisés avant vulcanisation ou après.

Dans le premier cas (i.e., avant vulcanisation du pneumatique), la composition auto-obturante est simplement appliquée de façon conventionnelle à l'endroit souhaité, pour formation de la couche 11. La vulcanisation est ensuite effectuée classiquement. Les élastomères TPS supportent bien les contraintes liées à l'étape de vulcanisation.

Une variante de fabrication avantageuse, pour l'homme du métier des pneumatiques, consistera par exemple à déposer à plat la couche auto-obturante directement sur un tambour de confection, sous la forme d'une couche ("skim") d'épaisseur adaptée (par exemple 3 mm), avant de recouvrir cette dernière avec la couche étanche à l'air puis le reste de la structure du pneumatique. Ce type de procédé permet en outre de réaliser aisément le second mode de réalisation de la figure 2 dans lequel la couche d'étanchéité 10 constitue la paroi interne du pneumatique en contact avec l'air de gonflage.

Dans le second cas (i.e., après vulcanisation du pneumatique), la couche auto-obturante est appliquée à l'intérieur du bandage pneumatique cuit par tout moyen approprié, par exemple par collage, par pulvérisation ou encore extrusion et soufflage d'un film d'épaisseur appropriée.

Lors d'essais, des pneumatiques de type tourisme, de dimension 205/55 R16 "Energy 3" ont été testés. La paroi interne des pneumatiques (comportant déjà la couche étanche à l'air 12) a été recouverte par la couche auto-obturante 11 précédemment décrite ("Mediprene 500 000M"), d'une épaisseur de 2 mm, puis les pneumatiques ont été vulcanisés.

Sur l'un des pneumatiques monté et gonflé, cinq perforations de 6 mm de diamètre et deux perforations de 1 mm de diamètre ont été réalisées, à travers la bande de roulement et le bloc sommet d'une part, les flancs d'autre part, à l'aide de poinçons qui ont été immédiatement retirés. Le pneumatique a alors subi un roulage sur volant, à sa charge nominale; à 130 km/h, pendant 6 300-km, sans perte de pression.

Sur un second pneumatique monté et gonflé, les mêmes perforations ont été réalisés et les objets perforants laissés en place pendant une semaine. Le pneumatique a ensuite subi un roulage sur volant, à sa charge nominale, à 130 km/h, pendant 6 300 km, à nouveau sans perte de pression notable.

L'invention n'est pas limitée aux exemples décrits et représentés et diverses modifications peuvent y être apportées sans sortir de son cadre défini par les revendications annexées.

## Revendications

1. Pneumatique (1) comportant au moins deux flancs (3), un sommet (2) pourvu radialement extérieurement d'une bande de roulement, une structure de renfort de type carcasse (7), une armature de sommet (6), la surface interne des flancs (3) et du sommet formant une paroi interne du pneumatique (1), au moins une portion de ladite paroi étant recouverte par une couche auto-obturante (11) comportant un élastomère thermoplastique styrénique (dit « TPS ») et le pneumatique (1) étant apte à avoir une pression de gonflage en service Pg donnée, **caractérisé en ce que**, pour toute température dans une gamme de températures donnée, comprise entre +30°C et +100°C, la couche auto-obturante (11) a un facteur de perte tg δ inférieur à 0,2 et un module dynamique G* inférieur à Pg ; tg δ et G* étant mesurés à une fréquence de 10 Hz.

2. Pneumatique (1) selon la revendication 1, dans lequel la couche auto-obturante (11) présente, pour toute température dans la gamme de températures donnée, un facteur de perte tg δ inférieur à 0,15.

3. Pneumatique (1) selon l'une quelconque des revendications 1 et 2, dans lequel la couche auto-obturante (11) présente, pour toute température dans la gamme de températures donnée, un module dynamique G* supérieur à $^{Pg}/_{30}$.

4. Pneumatique (1) selon l'une quelconque des revendications 1 et 2, dans lequel la couche auto-obturante (11) présente, pour toute température dans la gamme de températures donnée, un module dynamique G* supérieur à 0,01 MPa.

5. Pneumatique (1) selon la revendication 4, dans lequel le module dynamique G* est tel que :

$$0,01 < G* < 0,1 \text{ MPa}$$

6. Pneumatique (1) selon l'une des revendications précédentes, dans lequel la gamme de températures donnée comprend en plus la plage [+10 ;+30]°C et s'étend ainsi de +10°C à +100°C.

7. Pneumatique (1) selon l'une quelconque des revendications 1 à 6, dans lequel la gamme de températures donnée comprend en plus la plage [+100 ; +130]°C et s'étend ainsi de +10°C à +130°C.

8. Pneumatique (1) selon l'une quelconque des revendications précédentes, dans lequel le TPS est l'élastomère majoritaire de la couche auto-obturante (11).

9. Pneumatique (1) selon l'une quelconque des revendications précédentes, dans lequel le TPS est choisi dans le groupe des co-polymères blocs styrène/butadiène/styrène (SBS), styrène/isoprène/styrène (SIS), styrène/ isoprène/ butadiène/ styrène (SIBS), styrène/éthylène/butylène/styrène (SEBS), styrène/ éthylène/propylène/styrène (SEPS), styrène/éthylène/éthylène/propylène/styrène (SEEPS), et les mélanges de ces copolymères.

10. Pneumatique (1) selon l'une des revendications précédentes, dans lequel la couche auto-obturante (11) a une épaisseur minimale de 0,3 mm, et préférentiellement entre 0,5 et 10 mm.

11. Pneumatique (1) selon l'une quelconque des revendications précédentes, dans lequel l'allongement à la rupture $\varepsilon_R$ de la couche auto-obturante (11) est supérieur à 500 % et de préférence supérieur à 800 %.

12. Pneumatique (1) selon l'une quelconque des revendications précédentes, dans lequel la contrainte à la rupture $\sigma_R$ de la couche auto-obturante (11) est supérieure à 0,2 MPa.

13. Pneumatique (1) selon l'une quelconque des revendications précédentes, dans lequel la composition auto-obturante (11) comporte une huile d'extension à un taux compris entre 200 et 700 pce (parties en poids pour cent d'élastomère).

14. Pneumatique (1) selon l'une quelconque des revendications précédentes, comprenant par ailleurs une couche d'étanchéité (10) constituée d'une composition de caoutchouc sensiblement étanche au gaz de gonflage couvrant substantiellement toute la paroi interne dudit pneumatique (1), dans lequel la couche auto-obturante (11) recouvre au moins en partie, la couche d'étanchéité (10) du côté de la cavité interne du pneumatique (1).

15. Pneumatique (1) selon l'une des revendications précédentes, comprenant par ailleurs une couche d'étanchéité (10) constituée d'une composition de caoutchouc sensiblement étanche au gaz de gonflage couvrant substantiellement toute la paroi interne dudit pneumatique (1), dans lequel la couche auto-obturante (11), est disposée entre la couche d'étanchéité (10) et le renfort de type carcasse (7).

**16.** Pneumatique (1) selon l'une des revendications 14 et 15, dans lequel ladite couche auto-obturante (11) est disposée au niveau du sommet dudit pneumatique (1).

**17.** Pneumatique (1) selon l'une des revendications 14 et 15, dans lequel ladite couche auto-obturante (11) se prolonge avantageusement d'un flanc à l'autre, au moins jusqu'à une position radiale correspondant aux équateurs dudit pneumatique (1).

**18.** Pneumatique (1) selon l'une des revendications 14 et 15, dans lequel ladite couche auto-obturante (11) se prolonge avantageusement d'un flanc à l'autre, au moins jusqu'à une position radiale correspondant sensiblement au rebord du crochet de jante lorsque le pneumatique (1) est en position montée.

**Claims**

**1.** Tyre (1) comprising at least two sidewalls (3), a crown (2) provided radially externally with a tread, a carcass-type (7) reinforcing structure and a crown reinforcement (6), the inner surface of the sidewalls (3) and of the crown forming an inner wall of the tyre (1), at least one portion of said wall being covered with a self-sealing layer (11) comprising a thermoplastic styrene (TPS) elastomer and the tyre (1) being able to be inflated to a given service inflation pressure $P_i$, **characterized in that**, for any temperature within a given temperature range, between +30°C and +100°C, the self-sealing layer (11) has a loss factor tan δ of less than 0.2 and a dynamic modulus $G^*$ of less than $P_i$, tan δ and $G^*$ being measured at a frequency of 10 Hz.

**2.** Tyre (1) according to Claim 1, in which the self-sealing layer (11) has, for any temperature within the given temperature range, a loss factor tan δ of less than 0.15.

**3.** The tyre (1) as claimed in either of Claims 1 and 2, in which the self-sealing layer (11) has, for any temperature within the given temperature range, a dynamic modulus $G^*$ of greater than $P_i/30$.

**4.** The tyre (1) as claimed in either of Claims 1 and 2, in which the self-sealing layer (11) has, for any temperature within the given temperature range, a dynamic modulus $G^*$ of greater than 0.01 MPa.

**5.** Tyre (1) according to Claim 4, in which the dynamic modulus $G^*$ is such that:

$$0.01 < G^* < 0.1 \text{ MPa}.$$

**6.** Tyre (1) according to one of the preceding claims, in which the given temperature range additionally includes the [+10 ; +30]°C range and thus extends from +10°C to +100°C.

**7.** Tyre (1) according to any one of Claims 1 to 6, in which the given temperature range additionally includes the [+100; +130]°C range and thus extends from +10°C to +130°C.

**8.** Tyre (1) according to any one of the preceding claims, in which the TPS is the predominant elastomer of the self-sealing layer (11).

**9.** Tyre (1) according to any one of the preceding claims, in which the TPS is chosen from the group of styrene/butadiene/styrene (SBS), styrene/isoprene/styrene (SIS), styrene/ isoprene/ butadiene/ styrene (SIBS), styrene/ethylene-butylene/styrene (SEBS), styrene/ethylene-propylene/styrene (SEPS) and styrene/ethylene-ethylenepropylene/ styrene (SEEPS) block copolymers and blends of these copolymers.

**10.** Tyre (1) according to one of the preceding claims, in which the self-sealing layer (11) has a minimum thickness of 0.3 mm and preferably of between 0.5 and 10 mm.

**11.** Tyre (1) according to any one of the preceding claims, in which the elongation at break $\varepsilon_B$ of the self-sealing layer (11) is greater than 500 % and preferably greater than 800 %.

**12.** Tyre (1) according to any one of the preceding claims, in which the stress at break $\sigma_B$ of the self-sealing layer (11) is greater than 0.2 MPa.

**13.** Tyre (1) according to any one of the preceding claims, in which the self-sealing composition (11) includes an extender oil in an amount of between 200 and 700 phe (parts per hundred elastomer by weight).

**14.** Tyre (1) according to any one of the preceding claims, which further includes an airtight layer (10) having a rubber composition substantially impermeable to the inflation gas and substantially covering the entire inner wall of said tyre (1), in which the self-sealing layer (11) covers, at least partly, the airtight layer (10) on the side facing the internal cavity of the tyre (1).

**15.** Tyre (1) according to one of the preceding claims, which moreover includes an airtight layer (10) having a rubber composition, substantially impermeable to the inflation gas and substantially covering the entire inner wall of said tyre (1), in which the self-sealing layer (11) is placed between the airtight layer (10) and the carcass-type reinforcement (7).

16. Tyre (1) according to either of Claims 14 and 15, in which said self-sealing layer (11) is placed at the crown of said tyre (1).

17. Tyre (1) according to either of Claims 14 and 15, in which said self-sealing layer (11) advantageously extends from one sidewall to the other, at least up to a radial position corresponding to the equators of said tyre (1).

18. Tyre (1) according to either of Claims 14 and 15, in which said self-sealing layer (11) advantageously extends from one sidewall to the other, at least up to a radial position corresponding approximately to the edge of the rim gutter when the tyre (1) is in the fitted position.

**Patentansprüche**

1. Luftreifen (1), der mindestens zwei Flanken (3), einen radial außen mit einem Laufstreifen versehenen Scheitel (2), eine Verstärkungsstruktur vom Typ Karkasse (7), eine Scheitelbewehrung (6) aufweist, wobei die Innenfläche der Flanken (3) und des Scheitels eine Innenwand des Luftreifens (1) bildet, wobei mindestens ein Abschnitt der Wand mit einer selbstdichtenden Schicht (11) bedeckt ist, die ein thermoplastisches Styrol-Elastomer (genannt "TPS") aufweist, und der Luftreifen (1) einen gegebenen Betriebsluftdruck Pg haben kann, **dadurch gekennzeichnet, dass** für jede Temperatur in einem gegebenen Temperaturbereich, der zwischen + 30°C und + 100°C liegt, die selbstdichtende Schicht (11) einen Verlustfaktor tg δ geringer als 0,2 und einen dynamischen Modul G* geringer als Pg hat; wobei tg δ und G* mit einer Frequenz von 10 Hz gemessen werden.

2. Luftreifen (1) nach Anspruch 1, bei dem die selbstdichtende Schicht (11) für jede Temperatur im gegebenen Temperaturbereich einen Verlustfaktor tg δ geringer als 0,15 aufweist.

3. Luftreifen (1) nach einem der Ansprüche J. und 2, bei dem die selbstdichtende Schicht (11) für jede Temperatur im gegebenen Temperaturbereich einen dynamischen Modul G* höher als $Pg/_{30}$ aufweist.

4. Luftreifen (1) nach einem der Ansprüche 1 und 2, bei dem die selbstdichtende Schicht (11) für jede Temperatur im gegebene Temperaturbereich einen dynamischen Modul G* höher als 0,01 MPa aufweist.

5. Luftreifen (1) nach Anspruch 4, bei dem der dynamische Modul G* derart ist, dass gilt:

$$0,01 < G* < 0,1 \text{ MPa}$$

6. Luftreifen (1) nach einem der vorhergehenden Ansprüche, bei dem der gegebene Temperaturbereich zusätzlich den Bereich [+ 10; + 30]°C enthält und sich so von + 10°C bis + 100°C erstreckt.

7. Luftreifen (1) nach einem der Ansprüche 1 bis 6, bei dem der gegebene Temperaturbereich zusätzlich den Bereich [+ 100; + 130) °C enthält und sich so von + 10°C bis + 130°C erstreckt.

8. Luftreifen (1) nach einem der vorhergehenden Ansprüche, bei dem das TPS das mehrheitliche Elastomer der selbstdichtenden Schicht (11) ist.

9. Luftreifen (1) nach einem der vorhergehenden Ansprüche, bei dem das TPS aus der Gruppe der Blockcopolymere Styrol/Butadien/Styrol (SBS), Styrol/Isopren/Styrol (SIS), Styrol/Isopren/ Butadien/Styrol (SIBS), Styrol/Ethylen/Butylen/Styrol (SEBS), Styrol/Ethylen/Propylen/Styrol (SEPS), Styrol/Ethylen/ Ethylen/Propylen/Styrol (SEEPS) und den Mischungen dieser Copolymere ausgewählt wird.

10. Luftreifen (1) nach einem der vorhergehenden Ansprüche, bei dem die selbstdichtende Schicht (11) eine Mindestdicke von 0,3 mm und vorzugsweise zwischen 0,5 und 10 mm hat.

11. Luftreifen (1) nach einem der vorhergehenden Ansprüche, bei dem die Bruchdehnung $\varepsilon_R$ der selbstdichtenden Schicht (11) größer als 500 % und vorzugsweise größer als 800 % ist.

12. Luftreifen (1) nach einem der vorhergehenden Ansprüche, bei dem die Bruchspannung $\sigma_R$, der selbstdichtenden Schicht (11) höher als 0,2 MPa ist.

13. Luftreifen (1) nach einem der vorhergehenden Ansprüche, bei dem die selbstdichtende Zusammensetzung (11) ein Extenderöl in einem Enteil zwischen 200 und 700 pce (Prozent-Gewichtsteile Elastomer) aufweist.

14. Luftreifen (1) nach einem der vorhergehenden Ansprüche, der außerdem eine Abdichtungsschicht (10) enthält, die aus einer gegenüber dem Füllgas im Wesentlichen dichten Kautschukzusammensetzung besteht, die im Wesentlichen die ganze Innenwand des Luftreifens (1) bedeckt, wobei die selbstdichtende Schicht (11) zumindest zum Teil die Abdichtungsschicht (10) auf der Seite des Innenhohlraums des Luftreifens (1) bedeckt.

15. Luftreifen (1) nach einem der vorhergehenden Ansprüche, der außerdem eine Abdichtungsschicht (10) enthält, die aus einer gegenüber dem Füllgas im Wesentlichen dichten Kautschukzusammensetzung besteht, die im Wesentlichen die ganze Innenwand des Luftreifens (1) bedeckt, wobei die selbstdichtende Schicht (11) zwischen der Abdichtungsschicht (10) und der Verstärkung vom Typ Karkasse (7) angeordnet ist.

16. Luftreifen (1) nach einem der Ansprüche 14 und 15, bei dem die selbstdichtende Schicht (11) in Höhe des Scheitels des Luftreifens (1) angeordnet ist.

17. Luftreifen (1) nach einem der Ansprüche 14 und 15, bei dem die selbstdichtende Schicht (11) sich vorteilhafterweise von einer Flanke zur anderen mindestens bis zu eine radialen Position verlängert, die den Äquatorlinien des Luftreifens (1) entspricht.

18. Luftreifen (1) nach einem der Ansprüche 14 und 15, bei dem die selbstdichtende Schicht (11) sich vorteilhafterweise von einer Flanke zur anderen mindestens bis zu einer radialen Position verlängert, die im Wesentlichen dem Rand der Nutpartie entspricht, wenn der Luftreifen (1) in der montierten Stellung ist.

**Fig. 1**

**Fig. 2**

30
7
10
11
S
3
15
17a
30
17b
Pg

**Fig. 3**

30
7
10
S
3
11
19
Pg

**Fig. 4**

**Fig. 5**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 4113799 A
- US 426468 A

- EP 1090069 B